# FASCICULE DE BREVET EUROPEEN

(11) **EP 3 159 989 B1**
(45) Date de publication et mention de la délivrance du brevet: **02.12.2020**
(21) Numéro de dépôt: 16306170.8
(22) Date de dépôt: 15.09.2016
(51) Int. Cl.: H02G 3/12

(54) **BOÎTE ÉLECTRIQUE À ENCASTRER DANS UNE PAROI**
ELEKTRISCHES GEHÄUSE ZUM EINBAU IN EINE WAND
ELECTRICAL BOX FOR FLUSH MOUNTING IN A WALL

(30) Priorité: 21.10.2015 FR 1560040
(43) Date de publication de la demande: 26.04.2017
(73) Titulaire: Legrand France, 87000 Limoges (FR); Legrand SNC, 87000 Limoges (FR)
(72) Inventeur: Delmas, Simon, 87400 La Geneytouse (FR)
(74) Mandataire: Jacobacci Coralis Harle

(56) Documents cités:
- EP-A1- 1 564 859
- DE-A1-102011 053 486
- FR-A1- 2 839 819

## Description

### DOMAINE TECHNIQUE AUQUEL SE RAPPORTE L'INVENTION

La présente invention concerne de manière générale l'encastrement d'appareillages électriques dans des cloisons creuses.

Elle concerne plus particulièrement une boîte électrique à engager au travers d'une cavité pratiquée dans une paroi, telle que définie dans le préambule de la revendication 1.

### ARRIERE-PLAN TECHNOLOGIQUE

On rappelle que, de manière générale, une cloison creuse comporte une ossature en métal ou en bois, sur laquelle sont rapportés des panneaux de plâtre.

Une boîte électrique à engager au travers d'une ouverture pratiquée dans un tel panneau de plâtre comprend généralement une paroi latérale cylindrique, fermée à l'arrière par un fond et bordée à l'avant par un trottoir périphérique, lequel est adapté à s'appuyer contre la face avant du panneau de plâtre.

Une telle boîte comporte intérieurement des puits de vissage, dans lesquels des vis peuvent venir se visser pour fixer un support d'appareillage électrique à la boîte.

Elle comporte également des moyens de fixation à l'arrière du panneau de plâtre qui, combinés avec le trottoir périphérique, sont conçus pour venir pincer le bord de l'ouverture du panneau de plâtre.

Ces moyens de fixation peuvent par exemple se présenter sous la forme de griffes qui interviennent en position diamétralement opposée et qui, sous le contrôle de vis, sont aptes à venir s'accrocher à l'arrière du panneau de plâtre.

L'avantage de cette solution technique est qu'elle permet de fixer la boîte électrique dans des panneaux de plâtre d'épaisseurs variables.

L'inconvénient est que son installation s'avère fastidieuse, notamment lorsqu'il s'agit de manœuvrer les vis pour faire remonter les griffes le long de la paroi latérale de la boîte électrique jusqu'à ce qu'elles s'accrochent au panneau de plâtre, tout en maintenant la boîte électrique dans l'orientation souhaitée.

On connaît aussi des boîtes électriques dont les moyens de fixation sont formés par des pattes d'encliquetage adaptées à s'accrocher à l'arrière des panneaux de plâtre. Ces boîtes électriques sont plus faciles à installer dans les panneaux de plâtre, puisqu'il suffit de les y engager pour qu'elles se clipsent automatiquement sur le panneau de plâtre. De telles boîtes électriques ne peuvent s'utiliser que sur des panneaux de plâtre dont les épaisseurs sont égales à la distance séparant les pattes d'encliquetage du trottoir périphérique de la boîte.

Un inconvénient de ces boîtes électriques est qu'elles sont difficiles à démonter de la paroi. Il faut en effet pour cela exercer un effort sur les pattes d'encliquetage pour les faire fléchir vers l'intérieur de la boîte et simultanément exercer un effort de traction sur la boîte pour la retirer de la paroi.

On connaît par ailleurs du document EP1564859 une boîte électrique équipée de pattes d'encliquetage qui présentent un bord rattaché au fond de la boîte et à distance du bord de ce fond, ce qui permet à ces pattes d'encliquetage de bénéficier d'un léger jeu en translation. Cette boîte électrique peut donc s'installer sur des panneaux de plâtre d'épaisseurs variables.

### OBJET DE L'INVENTION

Afin de remédier à l'inconvénient précité de l'état de la technique, la présente invention propose une boîte électrique telle que définie dans la revendication 1.

Ainsi, grâce à l'invention, les pattes d'encliquetage sont immobiles en translation par rapport à la paroi latérale du corps arrière de la boîte. De ce fait, lorsque les vis sont vissées, elles ne s'écartent pas du reste du corps arrière et ne découvrent donc pas des espaces entre les pattes et le reste du corps arrière (au bénéfice de la sécurité électrique et de l'étanchéité à l'air de la boîte électrique).

Par ailleurs, on notera que les vis vissées dans ces puits de vissage, dont on rappelle qu'elles sont initialement conçues pour permettre la fixation d'un support d'appareillage électrique, peuvent en outre avoir une fonction de levier.

En effet, lorsqu'un individu souhaite retirer la boîte électrique hors de la paroi, il peut utiliser ces vis en guise de levier afin de faire fléchir les pattes d'encliquetage vers l'intérieur de la boîte et de tirer la boîte hors de la paroi.

D'autres caractéristiques avantageuses et non limitatives de la boîte électrique conforme à l'invention sont définies dans les revendications 2 et suivantes.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'une boîte électrique conforme à l'invention ;
- les figures 2 à 4 sont des vues schématiques en coupe de la boîte électrique de la figure 1, illustrant trois étapes de montage de cette boîte électrique dans une paroi ; et
- la figure 5 est une vue schématique en perspective de la boîte électrique de la figure 1 et d'une partie du mécanisme d'appareillage qu'elle accueille.

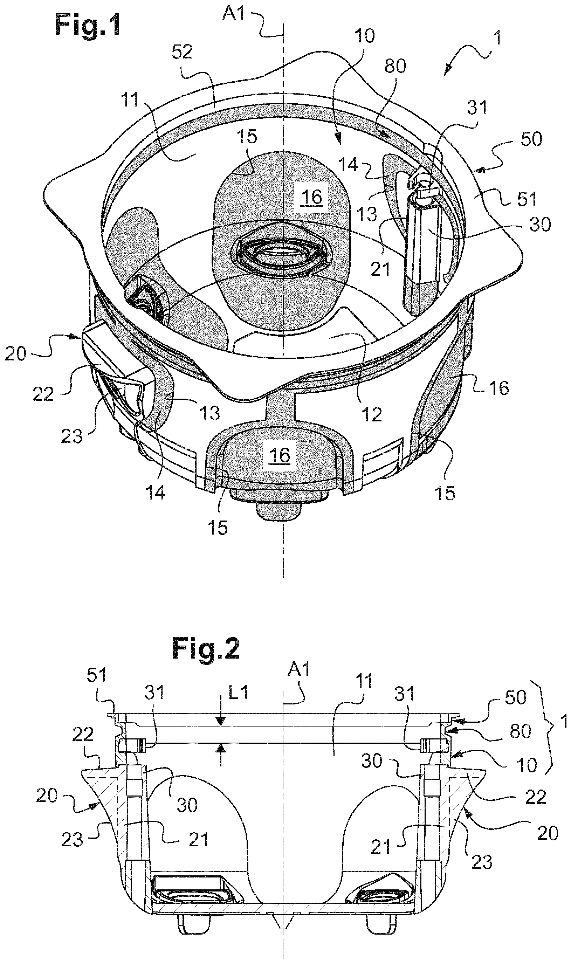

Sur les figures 1 à 5, on a représenté un mode de réalisation particulier d'une boîte électrique 1 à rapporter sur une paroi.

En préliminaire, on notera que sur la figure 1, les parties représentées en blanc sont des parties de la boîte électrique 1 réalisées dans un matériau rigide, tel que le polypropylène ou l'ABS (« acrylonitrile butadiène styrène »), et les parties grisées sont des parties réalisées dans un matériau sensiblement plus souple, tel que le SEBS (« polystyrène-b-poly(éthylène-butylène)-b-polystyrène »). Par « sensiblement plus souple », on entend que le module d'Young des parties grisées est au moins cinq fois inférieur à celui des parties en blanc. En pratique, contrairement aux parties en blanc, les parties grisées pourront être réalisées en matériau viscoélastique.

En l'espèce, cette boîte électrique 1 est du type à encastrer dans une cavité pratiquée dans une paroi. Cette paroi est ici formée par une cloison creuse.

On rappelle à ce sujet que, de manière connue, une telle cloison creuse est généralement composée d'une ossature métallique (formée de montants verticaux et de rails horizontaux non représentés) et de panneaux de plâtre rapportés sur l'une au moins des deux faces de l'ossature métallique.

En variante, il pourrait s'agir d'une cloison creuse maçonnée.

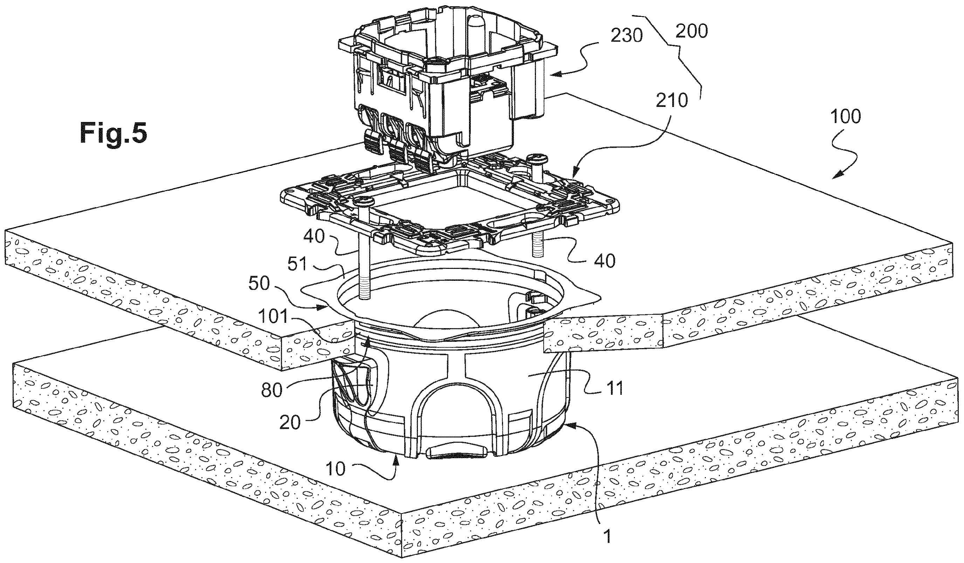

Ici, la cavité pratiquée dans la cloison creuse pour accueillir la boîte électrique 1 est simplement formée par une ouverture 101 réalisée à la scie cloche dans l'un des panneaux de plâtre 100 (voir par exemple la figure 5).

Dans la description, les termes « avant » et « arrière » seront utilisés par rapport à la direction du regard de l'installateur de la boîte électrique 1 dans le panneau de plâtre 100. Ainsi, les termes avant et arrière désigneront respectivement le lieu tourné vers l'extérieur de la cloison creuse et le lieu tourné à l'opposé.

Ici, comme le montre la figure 1, la boîte électrique 1 présente une forme générale cylindrique de révolution autour d'un axe central A1, de manière à pouvoir recevoir un appareillage électrique 200 (voir figure 5). En variante, elle pourrait présenter une forme différente, notamment parallélépipédique ou oblongue (de manière à délimiter plusieurs postes d'accueil d'appareillages électriques).

Comme cela apparaît sur la figure 1, cette boîte électrique 1 comporte un corps arrière 10 et une collerette avant 50.

Le corps arrière 10 comporte une paroi latérale 11 en matériau rigide qui est centrée sur l'axe central A1, qui est fermée à l'arrière par une paroi de fond 12 et qui est ouverte vers l'avant.

La collerette avant 50 comprend quant à elle une partie tubulaire 52, de diamètre égal à celui de la paroi latérale 11 du corps arrière 10, et un épaulement 51 en matériau rigide qui est recourbé vers l'extérieur, en saillie par rapport à la partie tubulaire 52.

Cet épaulement 51 forme ici un trottoir périphérique, puisqu'il longe extérieurement l'ensemble du bord avant de la partie tubulaire 52. Il est ainsi conçu pour prendre appui contre la face avant du panneau de plâtre 100, autour de l'ouverture 101. En variante, il pourrait présenter une forme différente. Ainsi pourrait-il éventuellement être interrompu par des encoches.

Quelle que soit sa forme, cet épaulement 51 permet de bloquer la boîte électrique 1 par rapport au panneau de plâtre 100 vers l'arrière.

Pour bloquer la boîte électrique 1 vers l'avant, le corps arrière 10 comporte préférentiellement deux pattes d'encliquetage 20 adaptées à s'accrocher à la face arrière du panneau de plâtre 100. En variante, elle pourrait n'en comporter qu'une seule, ou davantage.

On notera ici qu'une patte d'encliquetage est définie comme étant une patte qui est adapté à fléchir entre deux positions, dont une position fléchie et une position de repos dans laquelle elle est automatiquement rappelée. Une telle patte d'encliquetage est ainsi prévue pour pouvoir se clipser automatiquement, ici à l'arrière du panneau de plâtre.

Ici, les deux pattes d'encliquetage 20 sont situées de manière diamétralement opposée par rapport à l'axe central A1.

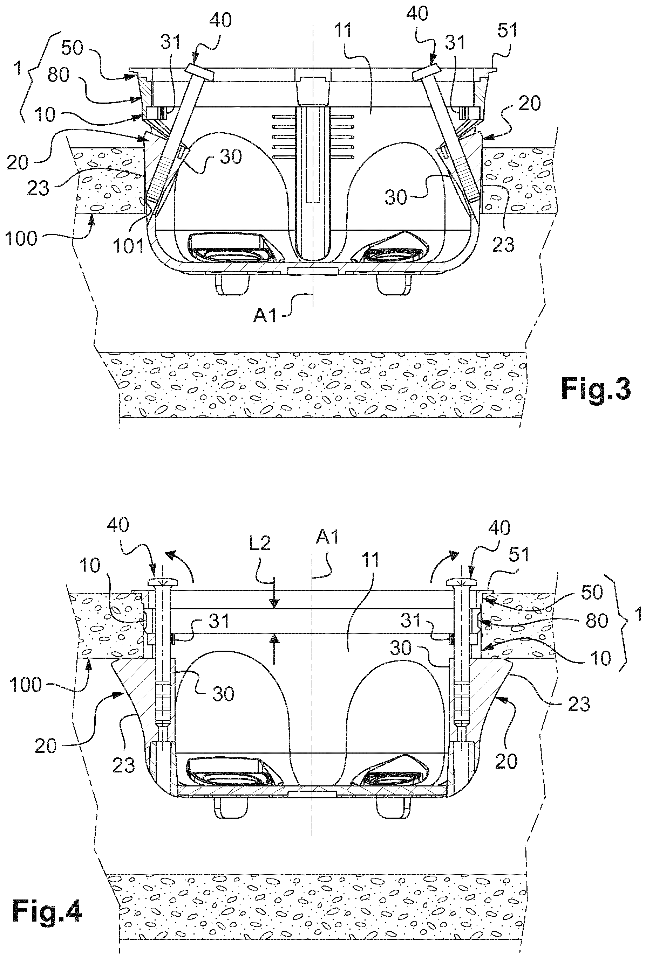

Chaque patte d'encliquetage 20 est solidarisée au corps arrière 10 de manière à pouvoir basculer entre une position déployée (ici la position de repos, comme le montre la figure 2) dans laquelle elles s'étendent au moins en partie en saillie à l'extérieur de ladite paroi latérale 11, et une position rétractée vers l'axe central A1 par rapport à la position déployée (figure 3).

Ici, ces pattes d'encliquetage 20 sont formées par moulage d'une seule pièce avec la partie rigide du corps arrière 10 et elles sont conçues de manière à pouvoir fléchir par rapport à ce dernier.

Ces pattes d'encliquetage 20 seront décrites plus en détail dans la suite de cet exposé.

La boîte électrique 1 comporte par ailleurs des moyens d'assujettissement d'un appareillage électrique. Comme le montre la figure 1, il s'agit ici de puits de vissage 30 taraudés intérieurement, permettent d'y visser des vis de fixation d'un support d'appareillage électrique. En variante, il pourrait s'agir de puits de vissage pour vis auto-taraudeuses.

Ces puits de vissage 30 sont ici conçus de telle manière qu'ils peuvent faciliter le retrait de la boîte électrique 1 hors de la paroi. Ils sont plus précisément conçus de manière que les vis qu'ils accueillent puissent servir de levier afin de forcer les pattes d'encliquetage 20 à se déplacer entre leurs positions déployée et rétractée.

Pour cela, selon une caractéristique particulièrement avantageuse de l'invention, un puits de vissage 30 est fixé à chaque patte d'encliquetage 20.

On comprend ainsi que les vis vissées dans ces puits de vissage 30 permettent de forcer les pattes d'encliquetage 20 à basculer.

Ici, la boîte électrique 1 est conçue pour pouvoir être montée sur des panneaux de plâtre 100 d'épaisseurs différentes.

Pour cela, le corps arrière 10 et la collerette avant 50 de la boîte électrique 1 sont disjoints et sont reliés ensemble par une ceinture périphérique 80 en matériau souple, qui est élastiquement déformable selon l'axe central A1.

Cette ceinture périphérique 80 est ici cylindrique de révolution autour de l'axe central A1. A l'état non contraint, elle présente un diamètre intérieur, un diamètre extérieur et une épaisseur respectivement égaux au diamètre intérieur, au diamètre extérieur et à l'épaisseur de la paroi latérale 11 du corps arrière 10. Elle s'étend entre le bord arrière de la partie tubulaire 52 de la collerette avant 50 et le bord avant de la paroi latérale 11 du corps arrière 10.

En variante, elle pourrait présenter une forme différente, avec par exemple une épaisseur variable le long de sa hauteur.

Cette ceinture périphérique 80 est déformable élastiquement selon l'axe central A1.

Ici, et de manière préférentielle, elle est déformable élastiquement tant en traction (pour être étirée), qu'en compression (pour être écrasée).

Elle est ainsi étirable depuis sa position de repos (non contrainte) jusqu'à une position maximum d'étirement élastique, avec une amplitude supérieure ou égale à 13 millimètres (et ici au moins égale à 15 millimètres).

Elle est en outre comprimable depuis sa position de repos jusqu'à une position maximum d'écrasement, avec une amplitude supérieure ou égale à 3 millimètres (et ici au moins égale à 5 millimètres).

Ici, la position de repos est telle que, lorsque la ceinture périphérique 80 n'est pas contrainte, l'épaulement 51 et les pattes d'encliquetage 20 de la boîte électrique sont distants d'une distance L1 égale à 13 millimètres, ce qui permet de rapporter la boîte électrique sur un panneau de plâtre de 13 millimètres d'épaisseur (voir figure 2).

Bien entendu, cette position de repos pourrait être choisie différemment (par exemple de telle sorte que la distance L1 soit inférieure à 13 mm ou qu'elle soit supérieure à 13 mm).

Ici, lorsque la ceinture périphérique 80 est étirée avec une amplitude de 13 millimètres par rapport à la position de repos, l'épaulement 51 et les pattes d'encliquetage 20 de la boîte électrique sont distants d'une distance L2 égale à 26 millimètres, ce qui permet de rapporter la boîte électrique sur un panneau de plâtre de 26 millimètres d'épaisseur (voir figure 4).

Lorsque le panneau de plâtre présente une épaisseur inférieure à 13 millimètres, par exemple égale à 10 millimètres, le vissage d'un mécanisme d'appareillage dans les puits de vissage 30 permettra de comprimer la ceinture périphérique 80, si bien que cette dernière ne s'oppose pas à la fixation de la boîte dans la cloison.

On comprend ainsi qu'il devient possible de monter la boîte électrique 1 sur une grande variété de parois, avec une grande facilité puisque ce montage se résume à encliqueter la boîte électrique sur la paroi.

On peut maintenant décrire plus en détail les deux pattes d'encliquetage 20.

Ces deux pattes d'encliquetage 20 sont identiques.

Comme le montre la figure 1, chaque patte d'encliquetage 20 est située dans une ouverture 13 pratiquée dans la paroi latérale 11 du corps arrière 10.

Elle comporte une lame de flexion 21 qui, au repos, s'étend dans le prolongement de la paroi latérale 11 du corps arrière 10 et qui porte, du côté de son extrémité avant, un rebord d'accrochage 22 en saillie vers l'extérieur.

Chaque lame de flexion 21 présente une forme allongée parallèlement à l'axe central A1, avec trois bords libres et un bord arrière qui est raccordé à la paroi latérale 11 du corps arrière 10 par une partie rigide, pour former une sorte de charnière.

Les trois bords libres sont quant à eux reliés au bord de l'ouverture 13 par un joint 14 en matériau souple, qui permet de garantir l'étanchéité de la boîte électrique autour de chaque patte d'encliquetage 20. Ce joint 14 est ici étirable et déformable élastiquement, pour ne pas former obstacle au basculement de la patte d'encliquetage 20 entre ses positions déployée et rétractée.

Le rebord d'accrochage 22 s'étend sensiblement à angle droit par rapport à la lame de flexion 21 (à 5 degrés près), à l'avant de celle-ci. Il présente ainsi une face avant parallèle à la face arrière de l'épaulement 51, ce qui lui permet de s'appliquer contre la face arrière du panneau de plâtre 100 lorsque l'épaulement s'applique contre la face avant de celui-ci.

Au repos, alors que la patte d'encliquetage 20 est en position déployée, le rebord d'accrochage 22 fait saillie à l'extérieur de la paroi latérale 11 du corps arrière 10. En position rétractée, il est entièrement situé à l'intérieur de la paroi latérale 11 du corps arrière 10, de manière à ne pas gêner l'engagement de ce corps arrière 10 au travers de l'ouverture 101 pratiquée dans le panneau de plâtre 100.

La distance séparant le rebord d'accrochage 22 et le bord arrière de la lame de flexion 21 est donc invariable.

Comme le montrent les figures 1 et 2, la patte d'encliquetage 20 porte, entre la face arrière de son rebord d'accrochage 22 et la face extérieure de sa lame de flexion 21, des nervures 23 sensiblement triangulaires qui permettent non seulement de rigidifier l'ensemble, mais qui forment en outre des rampes 23 permettant de forcer la patte d'encliquetage 20 à se déplacer vers sa position rétractée à la faveur de l'enfoncement de la boîte électrique 1 dans l'ouverture 101.

Ici, chaque patte d'encliquetage 20 est rappelée élastiquement en position déployée par le joint 14 et par sa charnière qui la relie au reste du corps arrière 10. Ainsi, une fois la boîte électrique 1 installée dans le panneau de plâtre 100, un effort de traction exercée sur celle-ci ne permet pas de la ressortir de l'ouverture 101.

Comme cela a été mentionné supra, pour permettre l'extraction de la boîte électrique 1 hors de l'ouverture 101, chaque patte d'encliquetage 20 porte l'un des puits de vissage 30, dont on rappelle qu'ils sont conçus pour recevoir la tige filetée d'une vis 40 de fixation d'un appareillage électrique.

Comme le montre la figure 1, chaque puits de vissage 30 est fixé exclusivement à la face interne de la lame de flexion 21 de la patte d'encliquetage 20 correspondante, de manière à ne pas gêner le basculement de celle-ci.

On comprend alors que lorsque le puits de vissage 30 accueille une vis 40, l'usager peut utiliser cette dernière à la manière d'un levier pour forcer la patte d'encliquetage 20 à basculer en position rétractée (voir figure 3).

De manière à indiquer le positionnement de la patte d'encliquetage et à assurer le maintien de la patte d'encliquetage en position déployée, il est ici prévu un crochet 31.

Comme le montre la figure 1, lorsque la patte d'encliquetage 20 est en position déployée, ce crochet 31 s'étend à l'avant et dans l'axe du puits de vissage 30.

Ce crochet 31 présente deux pattes qui délimitent entre elles une ouverture de diamètre égal, au jeu près, à celui de la vis 40 (et à celui de l'alésage taraudé prévu dans le puits de vissage 30), de manière à assurer un bon maintien de la vis 40. Cette ouverture est ouverte vers l'axe central A1 pour permettre à la vis 40 de s'échapper latéralement du crochet 31 lorsque l'usager souhaite la déclipser de ce crochet 31.

En variante, le crochet pourrait ne présenter qu'une seule patte.

Ici, ce crochet 31 en matériau rigide est situé en saillie de la face intérieure de la paroi latérale 11 du corps arrière 10. En variante, il pourrait être situé autrement, par exemple en saillie de la collerette avant 50.

On observe par ailleurs sur la figure 1 que pour permettre de tirer à l'intérieur de la boîte électrique 1 des conducteurs électriques d'amenée de courant, le corps arrière 10 présente au moins une ouverture de passage 15.

Ici, il est prévu quatre ouvertures de passage 15 qui s'étendent chacune à cheval sur la paroi latérale 11 et sur la paroi de fond 12 du corps arrière 10 de la boîte électrique 1.

Ces ouvertures de passage 15 sont initialement fermées par des opercules 16 en matériau souple, qui sont transperçables ou manuellement retirables pour permettre le passage et le maintien de l'extrémité d'une gaine de cheminement à l'intérieur de laquelle courent des fils électriques.

Ici, la boîte électrique 1 est fabriquée en deux opérations successives, dont une opération de moulage des parties rigides (en blanc sur la figure 1), suivie d'une opération de surmoulage des parties flexibles (grisées sur la figure 1). Le film 14, la ceinture périphérique 80 et les opercules 16 sont donc formés d'une seule pièce, dans un même matériau.

Sur les figures 2 à 4, on a représenté en coupe les étapes de mises en place de la boîte électrique 1 au travers de l'ouverture 101 pratiquée dans le panneau de plâtre 100.

Initialement, comme le montre la figure 2, les pattes d'encliquetage sont en position déployée et la ceinture périphérique 80 n'est pas étirée.

Puis, lorsque l'installateur force la boîte électrique 1 à s'engager au travers de l'ouverture 101, les rampes 23 des pattes d'encliquetage 20 viennent en appui contre le bord de l'ouverture 101, ce qui contraint les pattes d'encliquetage 20 à basculer en position rétractée (voir figure 3).

Ici, on pourra noter que si l'effort à exercer axialement sur la boîte électrique 1 pour la faire rentrer dans l'ouverture 101 est trop important, l'installateur peut faire levier avec les vis 40 pour forcer les pattes d'encliquetage 20 à basculer en position rétractée de manière à ce qu'elle ne gênent par l'insertion de la boîte électrique 1 dans l'ouverture 101.

Généralement, lorsque l'épaulement 51 de la collerette avant 50 arrive en appui contre la face avant du panneau de plâtre 100, les pattes d'encliquetage 20 sont encore situées dans l'ouverture 101, si bien qu'elles ne peuvent pas se déployer à l'arrière du panneau de plâtre 100.

L'installateur peut alors forcer la ceinture périphérique 80 à s'étirer axialement, soit en poussant sur la paroi du fond 12 du corps arrière 10, soit en poussant sur les vis 40 vers l'arrière.

Dès que les pattes d'encliquetage 20 dépassent le bord arrière de l'ouverture 101, elles se déploieront alors naturellement à l'arrière du panneau de plâtre 100.

Comme le montre la figure 4, l'installateur pourra alors s'assurer de la fiabilité du montage en clipsant les vis 40 dans les crochets 31 (ce qui ne sera possible que si la boîte électrique 1 est parfaitement engagée dans le panneau de plâtre 100 et si les pattes d'encliquetage 20 sont situées à l'arrière de ce panneau de plâtre 100).

Une fois la boîte électrique 1 en place, l'installateur peut y rapporter l'appareillage électrique 200. Le support 210 et le socle 230 de cet appareillage électrique 200 sont ici représentés en vue éclatée sur la figure 5. Ils présentent des formes classiques et ne seront donc pas décrits en détail.

On observera seulement sur cette figure que le support 210, qui sert au montage du socle 230 à l'intérieur de la boîte électrique 1, se présente sous la forme d'un cadre plat carré dont le bord intérieur est conçu pour recevoir, par encliquetage, le socle 230 et dont les quatre branches présentent un orifice en forme de trou de serrure propre à permettre sa fixation à la boîte électrique 1, au moyen des vis 40.

Lorsque l'usager souhaite retirer la boîte électrique 1 du panneau de plâtre 100, il doit retirer l'appareillage électrique 200 en dévissant partiellement les vis 40, puis il peut ensuite forcer les vis 40 à sortir latéralement des crochets 31, de manière à faire basculer les pattes d'encliquetage 20 en position rétractée. Alors, dès que les pattes d'encliquetage 20 auront basculé, la ceinture périphérique 80 reprendra sa forme initiale (non étirée), ce qui permettra que les pattes d'encliquetage 20 soient retenues en position rétractée par le bord de l'ouverture 101. L'usager pourra alors facilement extraire la boîte électrique 1 hors de l'ouverture 101.

La présente invention n'est nullement limitée au mode de réalisation décrit et représenté, mais l'homme du métier saura y apporter toute variante possible.

Ainsi, on aurait pu prévoir que le rebord d'accrochage de chaque patte d'encliquetage présente un moyen d'assujettissement d'une calle. A titre d'exemple, la face avant de ce rebord d'accrochage pourrait présenter en creux une rainure en queue d'aronde, permettant d'y fixer la calle. Cette calle formant une surépaisseur, elle pourra alors permettre de fixer la boîte électrique sur des panneaux de plâtre de faibles épaisseurs. Elle pourra également permettre de forcer la ceinture périphérique à davantage s'étendre axialement, de manière à accroître le volume intérieur de la boîte électrique 1 (ce qui permettra d'y rapporter des appareillages électriques volumineux).

Selon une autre variante de l'invention, on aurait pu prévoir que la boîte électrique soit dépourvue d'épaulement (permettant de s'appuyer contre la face avant du panneau de plâtre). On pourrait aussi prévoir que cette boîte électrique soit dépourvue de ceinture périphérique. Alors, dans cette variante, la boîte électrique ne comportera pas de collerette avant et son corps arrière comportera une simple paroi latérale ouverte vers l'avant, dont la face extérieure sera sensiblement lisse entre son ouverture avant et la patte d'encliquetage. Cette partie de la face extérieure de la paroi latérale pourra ainsi être engagée dans l'ouverture circulaire pratiquée dans le panneau de plâtre.

Dans cette variante, ce sera le support d'appareillage qui, une fois fixé à la boîte, permettra de bloquer la boîte vers l'arrière (pour éviter qu'elle ne s'enfonce trop dans la paroi), en s'appuyant contre la face avant du panneau de plâtre. Autrement formulé, le panneau de plâtre sera alors pincé entre les pattes d'encliquetage et le support d'appareillage.

Cette variante est avantageuse puisque la boîte, bien que dépourvue de ceinture périphérique, est alors adaptée à se clipser dans des panneaux de plâtre d'épaisseurs différentes, en vissant plus ou moins les vis de fixation du support d'appareillage à la boîte.

## Revendications

1. Boîte électrique (1) à engager au travers d'une cavité (101) pratiquée dans une paroi (100), comportant :
- un corps arrière (10) centré sur un axe central (A1) et qui comporte une paroi latérale (11),
- au moins une patte d'encliquetage (20) comportant, d'une part, une lamelle de flexion (21) qui est rattachée au corps arrière (10) par un bord d'extrémité et qui est flexible pour basculer entre une position déployée et une position rétractée vers l'axe central (A1), et, d'autre part, un rebord d'accrochage (22) adapté à s'accrocher à la paroi (100), qui est porté par la lamelle de flexion (21) et dont la distance audit bord d'extrémité est sensiblement invariable, et
- au moins un puits de vissage (30) qui est adapté à accueillir la tige filetée d'une vis de fixation (40) d'un mécanisme d'appareillage (200), et qui est fixé à la patte d'encliquetage (20)
**caractérisée en ce que** le bord d'extrémité de la patte d'encliquetage (20) se rattache à ladite paroi latérale (11) de façon à ce que la patte d'encliquetage est immobile en translation par rapport à ladite paroi latérale (11) afin que, lorsque la vis de fixation (40) est vissée dans le puits de vissage (30), la patte d'encliquetage (20) ne s'écarte pas du reste du corps arrière (10).

2. Boîte électrique (1) selon la revendication précédente, dans laquelle, le rebord d'accrochage (22) étant situé sur une face extérieure de la lamelle de flexion (21), le puits de vissage (30) est situé sur une face intérieure de la lamelle de flexion (21).

3. Boîte électrique selon l'une des revendications 1 et 2, dans laquelle le corps arrière comporte une paroi latérale ouverte vers l'avant, dont la face extérieure est sensiblement lisse entre son ouverture avant et la patte d'encliquetage.

4. Boîte électrique (1) selon l'une des revendications 1 et 2, dans laquelle, le corps arrière (10) comportant une paroi latérale (11), il est prévu une collerette avant (50) comprenant un épaulement (51) qui est réalisé dans un matériau rigide et qui s'étend en saillie vers l'extérieur par rapport à ladite paroi latérale (11).

5. Boîte électrique (1) selon la revendication 4, dans laquelle le corps arrière (10) et la collerette avant (50) sont disjoints et sont reliés ensemble par une ceinture périphérique (80) en matériau souple, qui est élastiquement déformable selon l'axe central (A1).

6. Boîte électrique (1) selon l'une des revendications précédentes, dans laquelle, le corps arrière (10) comportant une paroi latérale (11) en matériau rigide, chaque patte d'encliquetage (20) est située dans une ouverture (13) pratiquée dans ladite paroi latérale (11) et est reliée au bord de l'ouverture (13), sur au moins une partie de sa périphérie, par un joint (14) en matériau souple.

7. Boîte électrique (1) selon l'une des revendications précédentes, dans laquelle chaque patte d'encliquetage (20) comporte au moins une rampe (23) permettant de forcer ladite patte d'encliquetage (20) à se déplacer vers sa position rétractée à la faveur de l'enfoncement de la boîte électrique (1) dans ladite cavité (101).

8. Boîte électrique (1) selon l'une des revendications précédentes, dans laquelle le puits de vissage (30) vient de formation, par moulage d'une seule pièce, avec la patte d'encliquetage (20).

9. Boîte électrique selon l'une des revendications précédentes, dans laquelle chaque rebord d'accrochage est équipé d'un moyen d'assujettissement d'une cale.

10. Boîte électrique (1) selon l'une des revendications précédentes, dans laquelle il est prévu, à l'avant de ladite patte d'encliquetage (20), un crochet (31) délimitant une ouverture qui est située dans l'axe dudit puits de vissage (30) pour recevoir la tige filetée de la vis (40) et qui est ouverte vers l'axe central (A1) pour permettre à la vis (40) de s'échapper de ce crochet (31).

## Patentansprüche

1. Elektrisches Gehäuse (1) zum Einbau durch eine in eine Wand (100) eingebrachte Vertiefung (101) mit
- einem zu einer zentralen Achse (A1) zentrischen hinteren Körper (10), der eine Seitenwand (11) aufweist,
- wenigstens einer Einrastzunge (20), die einerseits eine Biegelamelle (21), die durch einen Endrand am hinteren Körper (10) befestigt ist und die biegsam ist, um zwischen einer ausgefahrenen Stellung und einer zur zentralen Achse (A1) hin zurückgezogenen Stellung zu kippen, und andererseits einen Einhakrand (22), der dazu ausgelegt ist, an der Wand (100) einzuhaken, der von der Biegelamelle (21) getragen wird und dessen Abstand zum Endrand im Wesentlichen nicht variabel ist, aufweist, und
- wenigstens einem Schraubkanal (30), der dazu ausgelegt ist, die Gewindestange einer Befestigungsschraube (40) eines Gerätemechanismus (200) aufzunehmen, und der an der Einrastzunge (20) befestigt ist,
**dadurch gekennzeichnet, daß** der Endrand der Einrastzunge (20) an der Seitenwand (11) derart befestigt ist, daß die Einrastzunge gegenüber der Seitenwand (11) translatorisch unbeweglich ist, damit sich die Einrastzunge (20) nicht vom Rest des hinteren Körpers (10) entfernt, wenn die Befestigungsschraube (40) in den Schraubkanal (30) eingeschraubt wird.

2. Elektrisches Gehäuse (1) gemäß dem vorangehenden Anspruch, bei dem der Schraubkanal (30) auf einer Innenseite der Biegelamelle (21) gelegen ist, wobei der Einhakrand (22) auf einer Außenseite der Biegelamelle (21) gelegen ist.

3. Elektrisches Gehäuse (1) gemäß einem der Ansprüche 1 und 2, bei dem der hintere Körper eine nach vorne offene Seitenwand aufweist, deren Außenseite zwischen ihrer vorderen Öffnung und der Einrastzunge im Wesentlichen glatt ist.

4. Elektrisches Gehäuse (1) gemäß einem der Ansprüche 1 und 2, bei dem, während der hintere Körper (10) eine Seitenwand (11) aufweist, ein vorderer Bund (50) mit einer Schulter (51) vorgesehen ist, die aus einem steifen Material gefertigt ist und die sich gegenüber der Seitenwand (11) nach außen hin vorstehend erstreckt.

5. Elektrisches Gehäuse (1) gemäß Anspruch 4, bei dem der hintere Körper (10) und der vordere Bund (50) voneinander beabstandet sind und durch einen umlaufenden Gürtel (80) aus weichem Material, der entlang der zentralen Achse (A1) elastisch verformbar ist, miteinander verbunden sind.

6. Elektrisches Gehäuse (1) gemäß einem der vorangehenden Ansprüche, bei dem, während der hintere Körper (10) eine Seitenwand (11) aus steifem Material aufweist, jede Einrastzunge (20) in einer in die Seitenwand (11) eingebrachte Öffnung (13) gelegen ist und mit dem Rand der Öffnung (13) auf wenigstens einem Teil seines Umfangs durch eine Dichtung (14) aus weichem Material verbunden ist.

7. Elektrisches Gehäuse (1) gemäß einem der vorangehenden Ansprüche, bei dem jede Einrastzunge (20) wenigstens eine Rampe (23) aufweist, die ermöglicht, die Einrastzunge (20) zu zwingen, sich zugunsten des Eindrückens des elektrischen Gehäuses (1) in die Vertiefung (101) in ihre zurückgezogene Stellung zu bewegen.

8. Elektrisches Gehäuse (1) gemäß einem der vorangehenden Ansprüche, bei dem der Schraubkanal (30) mit der Einrastzunge (20) durch Gießen eines einzigen Teils einstückig gefertigt ist.

9. Elektrisches Gehäuse (1) gemäß einem der vorangehenden Ansprüche, bei dem jeder Einhakrand mit einem Mittel zum Betätigen eines Keils versehen ist.

10. Elektrisches Gehäuse (1) gemäß einem der vorangehenden Ansprüche, bei dem vor der Einrastzunge (20) ein Haken (31) vorgesehen ist, der eine Öffnung begrenzt, die auf der Achse des Schraubkanals (30) gelegen ist, um die Gewindestange der Schraube (40) aufzunehmen, und die zur zentralen Achse (A1) hin offen ist, um der Schraube (40) zu ermöglichen, vom Haken (31) wegzukommen.

## Claims

1. An electrical box (1) for engaging through a cavity (101) formed in a wall (100), said electrical box comprising:
• a rear body (10) that is centered on a central axis (A1) and that includes a side wall (11);
• at least one snap-fastener tab (20) that comprises firstly a bendable strip (21) that is attached to the rear body (10) via an end edge and that is flexible so as to tilt between a deployed position and a retracted position towards the central axis (Al), and secondly a catch rim (22) that is adapted to catch against the wall (100), that is carried by the bendable strip (21), and that is at a distance from said end edge that is substantially constant; and
• at least one screw-fastener well (30) that is adapted to receive the threaded shank of a fastener screw (40) for fastening an accessory mechanism (200), and that is fastened to the snap-fastener tab (20);
said electrical box being **characterized in that** the end edge of the snap-fastener tab (20) is attached to said side wall (11) in such a manner that the snap-fastener tab is stationary in translation relative to said side wall (11) so that when the fastener screw (40) is tightened in the screw-fastener well (30), the snap-fastener tab (20) does not move away from the remainder of the rear body (10).

2. An electrical box (1) according to the preceding claim, wherein the catch rim (22) is situated on an outside face of the bendable strip (21), and the screw-fastener well (30) is situated on an inside face of the bendable strip (21).

3. An electrical box according to claim 1 or claim 2, wherein the rear body includes a side wall that is open towards the front, having an outside face that is substantially smooth between its front opening and the snap-fastener tab.

4. An electrical box (1) according to claim 1 or claim 2, wherein the rear body (10) includes a side wall (11), and a front collar (50) is provided that includes a shoulder (51) that is made out of a rigid material and that projects outwards relative to said side wall (11).

5. An electrical box (1) according to claim 4, wherein the rear body (10) and the front collar (50) are separate and are connected together by a peripheral band (80) made of flexible material that is elastically deformable along the central axis (A1).

6. An electrical box (1) according to any preceding claim, wherein the rear body (10) includes a side wall (11) made of rigid material, and each snap-fastener tab (20) is situated in an opening (13) that is formed in said side wall (11), and is connected to the edge of the opening (13), over at least a portion of its periphery, via a gasket (14) made of flexible material.

7. An electrical box (1) according to any preceding claim, wherein each snap-fastener tab (20) includes at least one ramp (23) that makes it possible to force said snap-fastener tab (20) to move towards its retracted position by driving the electrical box (1) into said cavity (101).

8. An electrical box (1) according to any preceding claim, wherein the screw-fastener well (30) is molded integrally with the snap-fastener tab (20).

9. An electrical box according to any preceding claim, wherein each catch rim is fitted with means for securing a spacer.

10. An electrical box (1) according to any preceding claim, wherein, at the front of said snap-fastener tab (20), a hook (31) is provided that defines an opening that is situated on the axis of said screw-fastener well (30) so as to receive the threaded shank of the screw (40), and that is open towards the central axis (A1) so as to enable the screw (40) to escape from the hook (31).
